Europäisches Patentamt

European Patent Office

Office européen des brevets

(11) Veröffentlichungsnummer: **0 249 843**
**B1**

(12) **EUROPÄISCHE PATENTSCHRIFT**

(45) Veröffentlichungstag der Patentschrift:
**21.03.90**

(21) Anmeldenummer: **87108233.5**

(22) Anmeldetag: **06.06.87**

(51) Int. Cl.⁴: **C09C 1/24**

(54) Verfahren zur Herstellung von farbstarken, im Nitrobenzolreduktionsverfahren erhaltenen Eisenoxidschwarzpigmente.

(30) Priorität: **18.06.86 DE 3620333**

(43) Veröffentlichungstag der Anmeldung:
**23.12.87 Patentblatt 87/52**

(45) Bekanntmachung des Hinweises auf die Patenterteilung:
**21.03.90 Patentblatt 90/12**

(84) Benannte Vertragsstaaten:
**DE FR GB IT**

(56) Entgegenhaltungen:
**DE-A- 1 803 637**
**DE-C- 551 255**
**US-A- 4 145 228**

(73) Patentinhaber: **BAYER AG,**
**D-5090 Leverkusen 1 Bayerwerk(DE)**

(72) Erfinder: **Westerhaus, Axel, Dr., Scheiblerstrasse 111,**
**D-4150 Krefeld(DE)**
Erfinder: **Ganter, Karl-Werner, Dr., Bethelstrasse 13,**
**D-4150 Krefeld(DE)**
Erfinder: **Buxbaum, Gunter, Dr., Holzapfelweg 2,**
**D-4150 Krefeld(DE)**

**Beschreibung**

Die vorliegende Erfindung betrifft ein Verfahren zur Herstellung neuer farbstarker und blaustichiger im Nitrobenzolverfahren erhaltene Eisenoxidschwarzpigmente durch Umsetzung aromatischer Nitroverbindungen mit metallischem Eisen, gegebenenfalls unter Zusatz von Steuerchemikalien, zu vorwiegend aus $Fe_3O_4$ bestehenden Pigmenten.

Eisenoxidschwarzpigmente können nach verschiedenen Verfahren hergestellt werden. So ist aus den DE-A 2 612 798 und DE-A 2 617 568 bekannt, Eisenoxidschwarzpigment durch die Umsetzung von Eisensalzen mit Alkalien durchzuführen. Ein wesentlicher Nachteil dieses Verfahrens besteht darin, daß eine den eingesetzten Alkalien äquivalente Menge an Neutralsalz gebildet wird. Die aus der DE-A 2 653 765 bekannte reduktive Röstung von Eisenverbindungen weist den Nachteil der Bildung von Röstgasen auf.

Weiterhin ist in der DE-A 3 341 885 die Reduktion von FeOOH oder $Fe_2O_3$ bei erhöhter Temperatur mit reduzierenden Gasen wie Wasserstoff beschrieben. Der Umgang mit Wasserstoff oder brennbaren Gasen bei erhöhter Temperatur ist jedoch aufwendig.

Die in der DE-A 2 617 569 beschriebene Umsetzung von Eisenschrott mit Luftsauerstoff im schwach sauren Milieu weist den Nachteil geringer Umsetzungsgeschwindigkeiten auf.

Schließlich ist aus den DE-C 703 416, DE-C 551 255 und DE-C 518 929 die Herstellung von Eisenoxidpigmenten durch Umsetzung von aromatischen Nitroverbindungen mit Eisen zu aromatischen Aminen und Eisenoxidpigmenten bekannt.

Je nach Art und Qualität des verwendeten Eisens (Granalien, Gußdrehspäne) und der eingesetzten Steuerchemikalien können gelbe ($\alpha$-FeOOH), rote ($\alpha$-$Fe_2O_3$) oder schwarze ($Fe_3O_4$) Eisenoxidpigmente erhalten werden.

Zur Herstellung von Eisenoxidschwarzpigmenten nach letztgenannten Verfahren werden vornehmlich Gußdrehspäne als preisgünstige Eisensorten eingesetzt. Die Steuerung des Prozesses im Hinblick auf die Teilchengröße wird durch Verfahrensvarianten, Steuerchemikalien und durch die Auswahl von Eisenqualitäten erreicht. Sehr feinteilige Pigmente nach diesem Verfahren sind jedoch so braunstichig, daß sie als Eisenoxidschwarzpigmente nicht brauchbar sind. Solche Pigmente haben Farbwertabweichungen von mehr als einer Einheit im $\Delta b^*$-Wert ($AB^* \geq +1$), bezogen auf das Handelsprodukt Bayferrox 320.

Daher sind keine farbstarken, farbneutralen bzw. blaustichigen Eisenoxidpigmente bekannt, wie sie in der Lack- und Baustoffindustrie bevorzugt werden, die im Nitrobenzolreduktionsverfahren erhalten worden sind.

Die Aufgabe der vorliegenden Erfindung besteht somit in der Bereitstellung eines Verfahrens zur Herstellung von Eisenoxidschwarzpigmenten nach dem Nitrobenzolreduktionsverfahren, welches die beschriebenen Nachteile nicht aufweist.

Diese Forderungen werden durch das erfindungsgemäße Verfahren zur Herstellung von Eisenoxidschwarzpigmenten erfüllt, wobei feinteilige nach dem Nitrobenzolreduktionsverfahren erhaltene Eisenoxidschwarzpigmente einer Temperaturbehandlung unterzogen werden.

Gegenstand der Erfindung ist somit ein Verfahren zur Herstellung von Eisenoxidschwarzpigmenten durch Umsetzung aromatischer Nitroverbindungen mit metallischem Eisen, gegebenenfalls unter Zusatz von Steuerchemikalien, zu vorwiegend aus $Fe_3O_4$ bestehenden feinteiligen Pigmenten, dadurch gekennzeichnet, daß die so hergestellten feinteiligen Pigmente einer Temperaturbehandlung bei 200 bis 800°C unter einer nichtoxidierenden, bevorzugt Wasserdampf enthaltenden, Atmosphäre für den Zeitraum von 2 Minuten bis 5 Stunden ausgesetzt werden.

Die nach dem erfindungsgemäßen Verfahren erhaltenen Eisenoxidschwarzpigmente weisen bevorzugt eine Kristallitgröße von <80 nm und eine relative Farbstärke von mehr als 150%, besonders bevorzugt 200 bis 250%, bei einem Blaustich von $\Delta b^* = \pm 0$ bis $-2,0$ Einheiten, bezogen auf ®Bayferrox 320, auf.

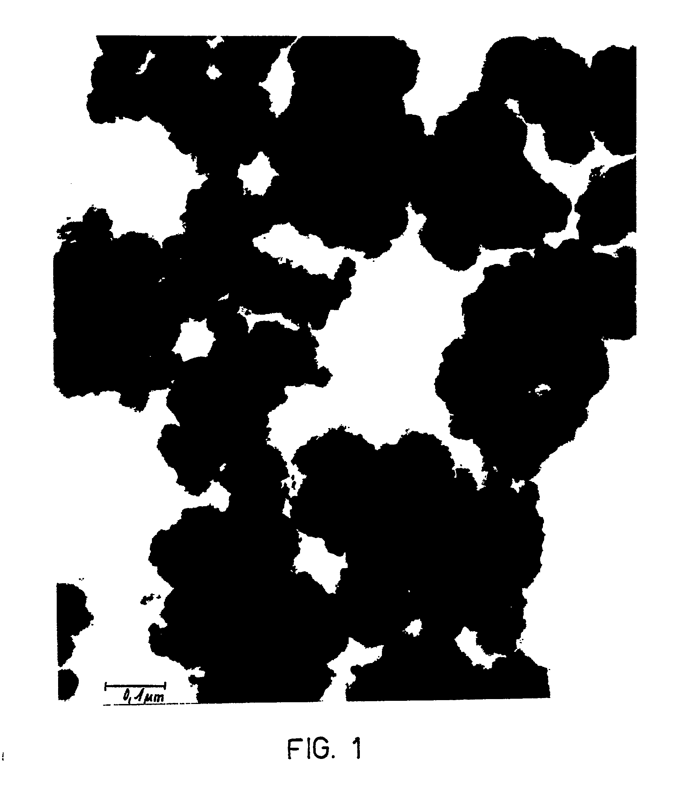

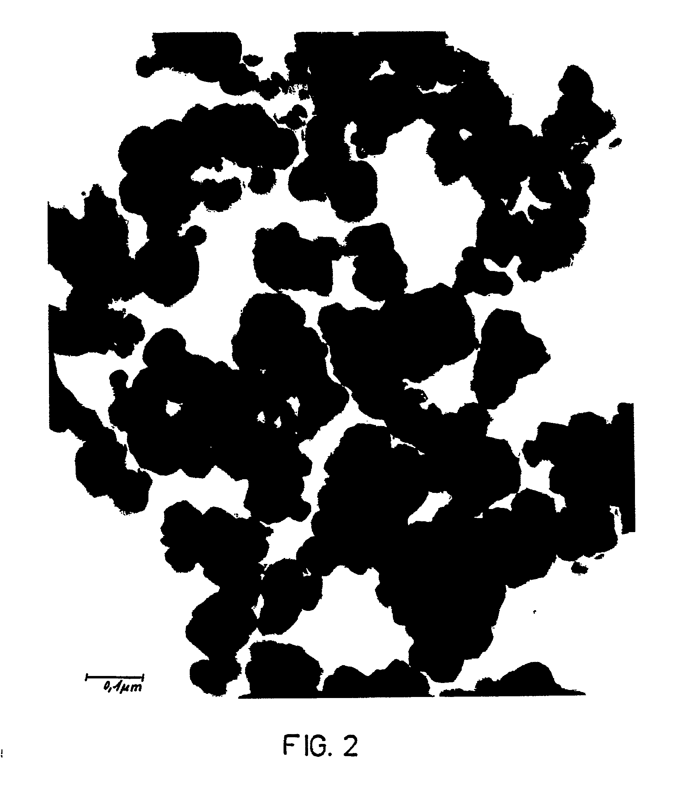

Die erfindungsgemäß erhaltenen Eisenoxidschwarzpigmente sind sehr gut dispergierbar und erreichen auch ohne eine zusätzliche Mahlung die Endfarbstärke. Beim als Vergleich herangezogenen ®Bayferrox 320 handelt es sich um ein nach dem Nitrobenzolreduktionsverfahren hergestelltes Eisenoxidschwarzpigment mit einem Eisengehalt von 92–95%, berechnet als $Fe_2O_3$. Das ®Bayferrox 320 ist ein Handelsprodukt der Bayer AG. Die nach dem Nitrobenzolreduktionsverfahren üblicherweise hergestellten Eisenoxidschwarzpigmente sind in der elektronenmikroskopischen Vergrößerung an der unregelmäßigen, zerklüfteten Oberfläche erkennbar (Fig. 1). Die erfindungsgemäß erhaltenen Produkte hingegen zeigen glatte Pigmentoberflächen (Fig. 2). Bedingt durch die im Nitrobenzolreduktionsverfahren verwendeten Einsatzstoffe ($SiO_2$-haltiger Schrott bzw. Eisenspäne) weisen alle erfindungsgemäß erhaltenen Pigmente einen $SiO_2$-Gehalt von mehr als 1% auf.

Besonders bevorzugt wird die Temperaturbehandlung bei 400 bis 750°C durchgeführt.

Das erfindungsgemäße Verfahren läßt sich vorteilhaft durchführen an allen nach dem Nitrobenzolreduktionsverfahren erhaltenen Eisenoxid-Schwarzpigmenten. Zu einer besonders hohen Verbesserung der Farbstärke gelangt man jedoch dann, wenn das beim erfindungsgemäßen Verfahren eingesetzte Vorprodukt ein wegen des bräunlichen Farbtones nicht als Schwarzpigment geeignetes, überwiegend aus $Fe_3O_4$ bestehendes Produkt ist.

Es hat, sich als besonders vorteilhaft erwiesen, daß erfindungsgemäße Verfahren kontinuierlich in einem Drehrohrofen durchzuführen.

Das erfindungsgemäße Verfahren wird im allgemeinen wie folgt durchgeführt.

Ein feinteiliges, braunstichiges $Fe_3O_4$-Pigment wird entweder gemahlen oder ungemahlen in getrockneter Form oder als feuchter Filterkuchen in einen Drehbirnenofen gefüllt und unter Schutzgas ($N_2$, Ar, $H_2O$) auf über 400°C und anschließend auf unter 100°C abgekühlt. Es können sich dann die üblichen Maßnahmen zur Stabilisierung von Eisenoxidschwarz-Pigmenten anschließen, wie sie beispielhaft in der DE-C 2 625 106, oder der EP-A 90 241 beschrieben sind.

Nach der Temperaturbehandlung sollten die Pigmente auf Temperaturen von unter 100°C gekühlt werden, um nicht durch eine Oxidation in ihren optischen Eigenschaften zu leiden.

Alle nach dem Nitrobenzolreduktionsverfahren hergestellten $Fe_3O_4$-Pigmente sind für das erfindungsgemäße Verfahren geeignet und werden hinsichtlich der Farbqualität verbessert. Dabei kann sowohl von Pigmentpasten (Festkörpergehalt 60-70 %) wie auch von getrockneten, ungemahlenen Pigmenten und von getrockneten gemahlenen Pigmenten ausgegangen werden.

Die Erfindung wird nachfolgend durch Beispiele erläutert, ohne daß hierin eine Einschränkung zu sehen ist.

Beispiele 1–4 (Vergleichsbeispiel)

Je 500 g eines Eisenoxidschwarzpigmentes nach dem Nitrobenzolverfahren (gemäß DE-C 551 255), wie sie unter der Bezeichnung ®Bayferrox 306, 316, 318, 320 handelsüblich sind, wurden in einem Labordrehbirnenofen unter 250 l $N_2$/h, der bei Raumtemperatur mit $H_2O$-Dampf gesättigt war, auf 500°C aufgeheizt und 2 h bei dieser Temperatur gehalten. Nach Abkühlen auf unter 100°C erfolgte die Bestimmung der Farbwerte meßtechnisch im Weißverschnitt (Abmischung des Schwarzpigmentes mit einem handelsüblichen $TiO_2$-Weißpigment im Gewichtsverhältnis 1:5) nach ISO 7224-2 und wurde gemäß ISO 7724-3 auf CIELAB 2/d-Werte umgerechnet und mit dem Handelsprodukt der Bayer AG ®Bayferrox 320 im ®Alkydal F 48-Lack (Handelsprodukt der Bayer AG) verglichen. Negative $\Delta b^*$-Werte kennzeichnen einen Blaustich.

Alle Pigmente wurden, wenn nicht anders beschrieben, 30 s in einer Kugelschwingmühle (Typ Mikrodismembrator II der Firma B. Braun) gemahlen.

In Tabelle 1 sind die Farbwertänderungen handelsüblicher ®Bayferrox-Typen zusammengestellt:

Tabelle 1

| Beispiel Nr. | Produkt | Farbwerte | | | |
|---|---|---|---|---|---|
| | | vor der Temperung | | nach der Temperung | |
| | | rel. Farbstärke % | Farbstich $\Delta b^*$ | rel. Farbstärke % | Farbstich $b^*$ |
| 1 | ®Bayferrox 306 | 68 | −1,8 | 87 | −1,9 |
| 2 | ®Bayferrox 316 | 89 | −1,3 | 105 | −1,7 |
| 3 | ®Bayferrox 318 | 93 | −0,3 | 117 | −1,1 |
| 4 | ®Bayferrox 320 | 100 | ±0 | 135 | −0,8 |

Beispiele 5 - 8

Wie unter Beispiel 1-4 beschrieben, wurden besonders feinteilige, stark braunstichige Schwarzpigmente bei 700°C und 30 min Verweildauer getempert. Den Anstieg der rel. Farbstärke sowie die Zunahme des Blaustichs ist zusammen mit weiteren Pigmenteigenschaften in Tabelle 2 zusammengestellt. Als Bezug dient ®Bayferrox 320.

Die Bestimmung der spezifischen Oberfläche erfolgte nach der BET-Methode mit Stickstoff; die mittlere Kristallitgröße wurde röntgenographisch aus der integralen Linienbreite eines Beugungsreflexes bestimmt.

Tabelle 2

| Beispiel Nr. | Produkt | rel. Farbstärke (%) | Farbstich $\Delta b^*$ | Kristallitgröße nm | spez. Oberfläche $m^2/g$ | $Fe^{3+/2+}$ |
|---|---|---|---|---|---|---|
| 5 | feinteiliges $Fe_3O_4$ | 185 | +1,3 | 61,5 | 16,4 | 2,93 |
| 6 | feinteiliges $Fe_3O_4$ getempert | 208 | −0,4 | 68,5 | 13,0 | 2,08 |
| 7 | sehr feinteiliges $Fe_3O_4$ | 213 | +2,8 | 50,5 | 26,0 | 3,21 |
| 8 | sehr feinteiliges $Fe_3O_4$ getempert | 246 | −0,1 | 54,5 | 19,8 | 2,01 |
| Bezug | ®Bayferrox 320 | 100 | 0 | 66,0 | 11,1 | 2,41 |

Beispiel 9

Die Wirkung der Verweilzeit ist aus der Tabelle 3 ersichtlich.

Tabelle 3

| Beispiel Nr. | Verweilzeit (500°C) h | rel. Farbstärke % | Farbstich $\Delta b^*$ | Kristallitgröße nm | spez. Oberfläche $m^2/g$ | $Fe^{3+/2+}$ |
|---|---|---|---|---|---|---|
| 9a | 0 | 185 | +1,3 | 61,5 | 16,4 | 2,93 |
| 9b | 0,25 | 195 | −0,2 | 61,5 | 22,0 | 2,10 |
| 9c | 0,5 | 208 | −0,4 | 67,0 | 21,0 | 2,08 |
| 9d | 3 | 193 | −0,5 | 69,0 | 19,4 | 2,09 |
| 9e | 9 | 185 | −0,5 | 71,0 | 18,6 | 2,05 |

Beispiel 10

Den Temperatureneinfluß zeigt Tabelle 4.

Tabelle 4

| Beispiel Nr. | Temperatur (30 min) °C | rel. Farbstärke % | Farbstich $\Delta b^*$ | Kristallitgröße nm | spez. Oberfläche $m^2/g$ | $Fe^{3+/2+}$ |
|---|---|---|---|---|---|---|
| 10a | 150 | 213 | +2,8 | 50,5 | 26 | 3,21 |
| 10b | 200 | 219 | +2,7 | 51,0 | 27 | 3,17 |
| 10c | 400 | 232 | +1,5 | 53,2 | 27 | 2,52 |
| 10d | 700 | 246 | −0,1 | 54,5 | 19,8 | 2,01 |
| 10e | 900 | 12 | +1,1 | 55,5 | 5,1 | 2,02 |

Beispiel 11 und 12

Das sehr gute Dispergierverhalten der getemperten Proben ist aus Tabelle 5 erkennbar.

Tabelle 5

| Beispiel Nr. | Produkt | Maßnahmen vor der Temperung | nach der Temperung | rel. Farbstärke % | Farbstich b* |
|---|---|---|---|---|---|
| 11a | sehr feinteiliges $Fe_3O_4$ | getrocknet | gemahlen | 246 | −0,1 |
| 11b | sehr feinteiliges $Fe_3O_4$ | getrocknet | ohne Mahlung | 243 | −0,1 |
| 12a | sehr feinteiliges $Fe_3O_4$ | als Paste (60% Festkörper) | ohne Malung | 221 | ±0 |
| 12b | sehr feinteiliges $Fe_3O_4$ | als Paste (60% Festkörper) | mit Mahlung | 233 | ±0 |

Daß bei Beispiel 11b, 12c trotz fehlender Mahlung nach dem Tempern nahezu identische Farbwerte resultieren, ist ebenfalls überraschend wie vorteilhaft.

## EP 0 249 843 B1

**Patentansprüche**

1. Verfahren zur Herstellung von Eisenoxidschwarzpigmenten durch Umsetzung aromatischer Nitroverbindungen mit metallischem Eisen, gegebenenfalls unter Zusatz von Steuerchemikalien, zu vorwiegend aus Fe₃O₄ bestehenden feinteiligen Pigmenten, dadurch gekennzeichnet, daß die so hergestellten feinteiligen Pigmente einer Temperaturbehandlung bei 200 bis 800°C unter einer nichtoxidierenden, bevorzugt Wasserdampf enthaltenden, Atmosphäre für den Zeitraum von 2 Minuten bis 5 Stunden ausgesetzt werden.

2. Verfahren gemäß Anspruch 1, dadurch gekennzeichnet, daß die Temperaturbehandlung bei 400 bis 750°C stattfindet.

3. Verfahren gemäß einem der Ansprüche 1 oder 2, dadurch gekennzeichnet, daß die Temperaturbehandlung kontinuierlich in einem Drehrohrofen durchgeführt wird.

**Claims**

1. A process for the production of iron oxide black pigments by reaction or aromatic nitro compounds with metallic iron, optionally with addition of control chemicals, to form finely divided pigments consisting predominantly of Fe₃O₄, characterized in that the finely divided pigments thus produced are subjected to a heat treatment at 200 to 800°C in a non-oxidizing atmosphere preferably containing steam for a period of 2 minutes to 5 hours.

2. A process as claimed in claim 1, characterized in that the heat treatment is carried out at 400 to 750°C.

3. A process as claimed in claim 1 or 2, characterized in that the heat treatment is carried out continuously in a rotating tube furnace.

**Revendications**

1. Procédé pour préparer des pigments noirs à base d'oxyde(s) de fer, par réaction de composés nitrés aromatiqués avec du fer métallique, éventuellement avec addition de produits chimiques directeurs, pour obtenir des pigments en fines particules consistant surtout en Fe₃O₄, procédé caractérisé en ce qu'on expose les pigments en fines particules ainsi produites à un traitement de chauffage à 200 jusqu'à 800°C dans une atmosphère non oxydante, de préférence une atmosphère contenant de la vapeur d'eau, pendant un espace de temps compris entre 2 min et 5 h.

2. Procédé selon la revendication 1, caractérisé en ce que le traitement de chauffage se produit à une température de 400 à 750°C.

3. Procédé selon l'une des revendications 1 ou 2, caractérisé en ce que le traitement de chauffage est effectué en continu dans un four tubulaire rotatif.

FIG. 1

0,1µm

FIG. 2